# EUROPEAN PATENT SPECIFICATION

(11) **EP 3 881 159 B1**
(45) Date of publication and mention of the grant of the patent: **07.08.2024**
(21) Application number: 18807243.3
(22) Date of filing: 15.11.2018
(51) Int. Cl.: G05G 1/36, G05G 1/44

(54) **PEDAL ASSEMBLY FOR A MOTOR VEHICLE**
PEDALANORDNUNG FÜR EIN KRAFTFAHRZEUG
ENSEMBLE PÉDALE DESTINÉ À UN VÉHICULE AUTOMOBILE

(43) Date of publication of application: 22.09.2021
(73) Proprietor: HELLA GMBH & CO. KGAA, 59552 Lippstadt (DE)
(72) Inventor: VIETHEN, Claus, 59597 Erwitte (DE)
(86) International application number: PCT/EP2018/081382
(87) International publication number: WO 2020/098943

(56) References cited:
- DE-A1- 102007 059 376
- FR-A1- 2 796 174
- US-A1- 2003 094 070

## Description

The present invention relates to a pedal assembly for a motor vehicle according to the preamble of claim 1.

Such pedal assemblies for motor vehicles, with at least one support and at least two pedals, each comprising a pedal arm mounted to said at least one support and pivotable around a corresponding pivot axis, a sensor for detecting a rotational movement of said pedal arm around said pivot axis and an interface for an electrical contact of said sensor with a control unit of said motor vehicle, are well known in different embodiments.

Furthermore, from the DE 10 2007 059 376 A1 a pedal assembly for a motor vehicle is known, too. This pedal assembly is designed as a modular pedal assembly with two frame-like supports and two pedals, each comprising a pedal arm mounted to the corresponding support and pivotable around a corresponding pivot axis.

From FR 2 796 174 A1 a pedal assembly according to the generic part of claim 1 is known.

It is an object of the invention to provide a pedal assembly for a motor vehicle, which shows an easy design.

This object of the invention is solved by a pedal assembly for a motor vehicle according to claim 1.

A main advantage of the pedal assembly for a motor vehicle according to the invention is, that the inventive pedal assembly shows an easy design, thus can be realized with less effort. Furthermore, the inventive pedal assembly can be manufactured with less material and less assembly work. Therefore, the inventive pedal assembly for a motor vehicle can be cost saving. This can be achieved by the inventive pedal assembly for a motor vehicle.

Further advantageous developments of the inventive pedal assembly for a motor vehicle are apparent from the sub-claims as well as from the following description of an exemplary embodiment of the pedal assembly for a motor vehicle according to the invention by means of the attached Figures.

Basically, the design of the pedal assembly for a motor vehicle according to the invention can be of any suitable shape, material, dimension and number of pedals as well as number of pedals housed by said single base plate. Advantageously, at least two of said at least two pedals are housed by said single base plate. That way, the design of the pedal assembly for a motor vehicle according to the invention is further simplified.

The pedal assembly for a motor vehicle according to the invention is, that said single base plate is designed, that said at least one pedal housed by said single base plate is mountable from a rear side of said single base plate, whereat said rear side is facing a frame of said motor vehicle said pedal assembly is mounted to. Hereby, the design of the inventive pedal assembly for a motor vehicle according to the invention is furthermore simplified. A separate cover for housing this pedal is not necessary. Moreover, a major problem of pedal assemblies for motor vehicles is, that there is always a risk of getting debris like small stones into the mechanism of the pedal assembly. The pedal assembly according to the aforementioned embodiment of the invention solves or reduces this problem by employing an easy design, too. This is especially true for pedal assemblies designed for so called standing pedals for motor vehicles.

Furthermore according to the invention said single base plate is comprising a frame part for said at least one pedal housed by said single base plate. That way, the single base plate can be realized with less material and shows an easy design, too.

Another advantageous development of the pedal assembly according to the invention is, that said pedal arm of said at least one pedal housed by said single base plate comprises a central part corresponding to said single base plate and an actuation part linked to said central part in a power transmitting manner. Hereby, the assembly of the at least one pedal housed by said single base plate is simplified. Furthermore, the size of the pedal arm opening for said pedal arm of said at least one pedal housed by said single base plate can be reduced. Thus, the risk of getting debris like small stones into the mechanism of the pedal assembly can be reduced, too.

A further advantageous development of the pedal assembly for a motor vehicle according to the invention is, that said at least two pedals comprise at least one pedal not housed by said single base plate, whereat said at least one pedal not housed by said single base plate is housed by a separate cover mounted to said single base plate. That way, the assembly of said at least one pedal not housed by said single base plate can be done from a front side of said single base plate positioned opposite to a rear side of said single base plate facing a frame of said motor vehicle the inventive pedal assembly is mounted to. Moreover, said pedal housed by said separate cover mounted to said single base plate can be accessed quite easily without the need for dismounting the inventive pedal assembly form said frame of said motor vehicle.

Another advantageous development of the pedal assembly for a motor vehicle according to the invention is, that said sensor of said pedal housed by said single base plate is designed as a separate sensor module and incorporated through a sensor opening of said single base plate. Hereby, said sensor of said pedal housed by said single base plate can be assembled to the single base plate quite easily. Furthermore, said sensor can be preconfigured and/or sourced from a supplier more easily.

A particular preferable development of the aforementioned embodiment of the pedal assembly for a motor vehicle according to the invention is, that said interface corresponding to said sensor of said pedal housed by said single base plate is designed as an integral part of said separate sensor module. Thus, said interface and said sensor corresponding to said interface can be preconfigured and/or sourced from a supplier as a single part. No further workload for electrically and mechanically connecting said interface to said separate sensor module or to another type of sensor configuration has to be spent.

In general, said single base plate and/or said separate cover can be of any kind, shape, material, dimension and position to the rest of the inventive pedal assembly for a motor vehicle. Advantageously, said single base plate and/or said separate cover are/is built from plastics. Plastics are available in a broad variety with different characteristics. Furthermore, plastics are lightweight material and easy to process.

Another advantageous development of the pedal assembly for a motor vehicle according to the invention is, that said at least two pedals of said pedal assembly are designed as an accelerator pedal and a brake pedal. Every motor vehicle, with an automatic gearbox or with a manual gearbox, does have at least an accelerator pedal and a brake pedal. Thus, the pedal assembly for a motor vehicle according to this embodiment can be produced in a high number of units. Despite this, the pedal assembly for a motor vehicle according to the invention may comprise other kinds of pedals, too. For example, the inventive pedal assembly may comprise three pedals, namely a clutch pedal, a brake pedal and an accelerator pedal. Other embodiments may comprise only a clutch pedal and a brake pedal.

The Figures are schematic illustrations of a pedal assembly for a motor vehicle according to the invention, wherein only the details necessary for the understanding of the invention are shown. Parts with the same function are marked by the same reference numbers.

It is shown by:
- Fig. 1: an embodiment of the pedal assembly for a motor vehicle according to the invention in a perspective view facing a front side of the pedal assembly,
- Fig. 2: the embodiment of Fig. 1 in an exploded view and
- Fig. 3: the embodiment of Fig. 1 in a perspective view facing a rear side of the pedal assembly.

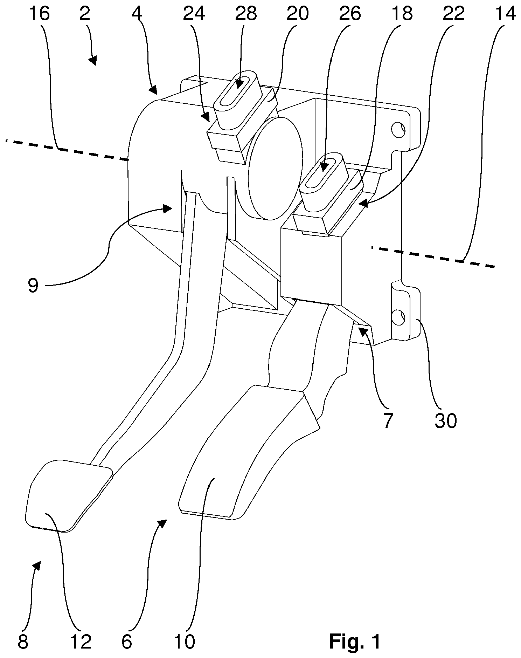

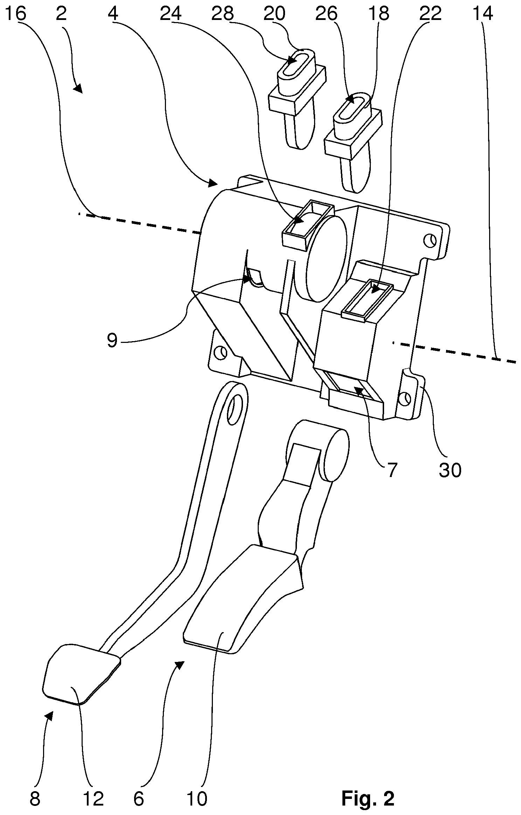

Fig. 1 displays an embodiment of a pedal assembly 2 for a motor vehicle in a first perspective view with a single support 4 and two pedals, namely an accelerator pedal 6 and a brake pedal 8. Said first perspective view is showing said single support 4 from a front side of said single support 4, which is facing a user of said pedal assembly 2 and arranged opposite to a rear side of said single support 4. Said single support 4 is designed as a single base plate for said two pedals 6, 8 and made from plastics. Said accelerator pedal 6 comprises a pedal arm 10 and said brake pedal 8 comprises a pedal arm 12. Each pedal arm 10, 12 is mounted to said single support 4 and pivotable around a corresponding pivot axis, namely a pivot axis of said pedal arm 10 of said accelerator pedal 6 and a pivot axis of said pedal arm 12 of said brake pedal 8. Both of said two pedals 6, 8 are housed by said single base plate 4, whereat said pedal arm 10 of said accelerator pedal 6 is extending through a pedal arm opening 7 of said single base plate 4 and said pedal arm 12 of said brake pedal 8 is extending through a pedal arm opening 9 of said single base plate 4. Said pedal arms 10, 12 as well as said corresponding pedal arm openings 7, 9 are shown in an exploded view in Fig. 2. Said motor vehicle is not displayed.

Said pivot axis of said pedal arm 10 of said accelerator pedal 6 is symbolized by a broken line 14 and said pivot axis of said pedal arm 12 of said brake pedal 8 is symbolized by a broken line 16. Furthermore, said pedal assembly 2 comprises a sensor 18 for detecting a rotational movement of said pedal arm 10 of said accelerator pedal 6 around said pivot axis 14 and a sensor 20 for detecting a rotational movement of said pedal arm 12 of said brake pedal 8 around said pivot axis 16. Each of said sensors 18, 20 of said accelerator pedal 6 and said brake pedal 8 is designed as a separate sensor module and incorporated through a sensor opening 22, 24 of said single base plate 4. Said separate sensor module 18 of said accelerator pedal 6 and said sensor module 20 of said brake pedal 8 as well as said corresponding sensor openings 22, 24 of said single base plate 4 are shown in an exploded view in Fig. 2.

An interface 26 for an electrical contact of said sensor 18 with a control unit of said motor vehicle and an interface 28 for an electrical contact of said sensor 20 with said control unit of said motor vehicle each is incorporated in said corresponding separate sensor module 18, 20, namely said interface 26 is incorporated in said separate sensor module 18 corresponding to said accelerator pedal 6 and said interface 28 is incorporated in said separate sensor module 20 corresponding to said brake pedal 8. Thus, said interface 26 is designed as an integral part of said separate sensor module 18 and said interface 28 is designed as an integral part of said separate sensor module 20. Said control unit is not displayed.

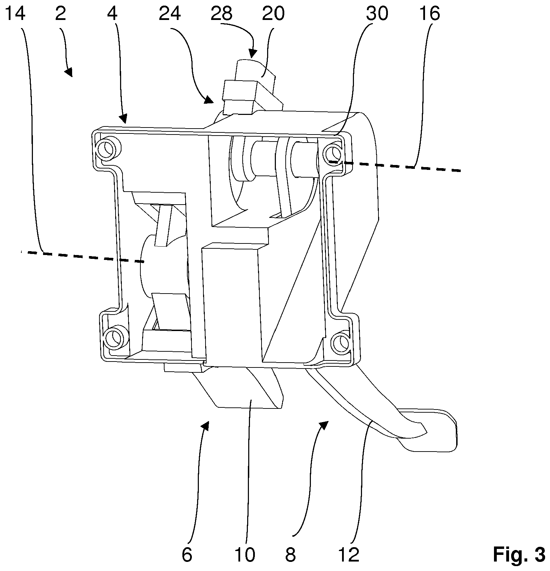

Fig. 3 displays said pedal assembly 2 in a second perspective view showing said pedal assembly 2 from a rear side of said base plate 4, which is facing a frame of said motor vehicle said pedal assembly 2 is mounted to. Said frame of said motor vehicle is not displayed. As can be seen best from Fig. 3, said single base plate 4 is comprising a frame part 30 for said accelerator pedal 6 and said brake pedal 8, each housed by said single base plate 4.

In the following, the function of said embodiment of a pedal assembly for a motor vehicle according to the invention is explained by means of Fig. 1 to 3.

In order to manufacture said pedal assembly 2 said accelerator pedal 6 and said brake pedal 8 each are assembled from said rear side of said single base plate 4 via said frame part 30 of said single base plate 4; see Fig. 3. Said pedal arms 10, 12 of said accelerator pedal 6 and said brake pedal 8 each are fed through said corresponding pedal arm openings 7, 9 of said single base plate 4 from said rear side of said single base plate 4. Thus, after the assembly of said accelerator pedal 6 and said brake pedal 8 said pedal arm 10 of said accelerator pedal 6 is extending through said pedal arm opening 7 and said pedal arm 12 of said brake pedal 8 is extending through said pedal arm opening 9. See Fig. 1.

Said separate sensor module 18 of said accelerator pedal 6 is inserted into said sensor opening 22 of said single base plate 4 and said separate sensor module 20 of said brake pedal 8 is inserted into said sensor opening 24 of said single base plate 4. See Fig. 2.

A user of said pedal assembly 2, namely a driver of said motor vehicle, is pressing said pedal arm 10 of said accelerator pedal 6 in order to accelerate said motor vehicle. Said pedal arm 10 is pivoted around said pivot axis 14 of said pedal arm 10. This pivot action of said pedal arm 10 around said pivot axis 14 is detected by said separate sensor module 18 corresponding to said accelerator pedal 6. Said aforementioned pivot action of said accelerator pedal 6 is transferred to said control unit of said motor vehicle via said interface 26 of said separate sensor module 18. In case said user is no longer pressing said pedal arm 10 of said accelerator pedal 6, said pedal arm 10 is pivoted in opposite direction around said pivot axis 14 of said pedal arm 10. This pivot action of said accelerator pedal 6 is transferred to said control unit of said motor vehicle, too.

The function of said brake pedal 8 is analog to the function of said accelerator pedal 6 explained above. Thus, said user of said pedal assembly 2 is pressing said pedal arm 12 of said brake pedal 8 in order to decelerate said motor vehicle. Said pedal arm 12 is pivoted around said pivot axis 16 of said pedal arm 12. This pivot action of said pedal arm 12 around said pivot axis 16 is detected by said separate sensor module 20 corresponding to said brake pedal 8. Said aforementioned pivot action of said brake pedal 8 is transferred to said control unit of said motor vehicle via said interface 28 of said separate sensor module 20. In case said user is no longer pressing said pedal arm 12 of said brake pedal 8, said pedal arm 12 is pivoted in opposite direction around said pivot axis 16 of said pedal arm 12. This pivot action of said brake pedal 8 is also transferred to said control unit of said motor vehicle.

The invention is not limited to the exemplary embodiment of the pedal assembly for a motor vehicle according to the invention discussed before.

Of course, the invention is not limited to an inventive pedal assembly comprising an accelerator pedal and a brake pedal. For example, another embodiment of the invention may comprise an acceleration pedal, a brake pedal and a clutch pedal. Still another embodiment of the invention may comprise a brake pedal and a clutch pedal.

In contrast to the embodiment of the invention explained, said pedal arm of said at least one pedal housed by said single base plate may comprise a central part corresponding to said single base plate and an actuation part linked to said central part in a power transmitting manner. Hereby, the assembly of the at least one pedal housed by said single base plate is simplified. Furthermore, the size of the pedal arm opening for said pedal arm of said at least one pedal housed by said single base plate can be reduced. Thus, the risk of getting debris like small stones into the mechanism of the pedal assembly can be reduced, too.

Furthermore, it is possible, that said at least two pedals comprise at least one pedal not housed by said single base plate, whereat said at least one pedal not housed by said single base plate is housed by a separate cover mounted to said single base plate. That way, the assembly of said at least one pedal not housed by said single base plate can be done from a front side of said single base plate positioned opposite to a rear side of said single base plate facing a frame of said motor vehicle the inventive pedal assembly is mounted to. Moreover, said pedal housed by said separate cover mounted to said single base plate can be accessed quite easily without the need for dismounting the inventive pedal assembly form said frame of said motor vehicle. A preferred embodiment of the aforementioned embodiment could be, that said separate cover is built from plastics. Plastics are available in a broad variety with different characteristics. Furthermore, plastics are lightweight materials and easy to process.

A main advantage of the pedal assembly for a motor vehicle according to the invention is, that the inventive pedal assembly shows an easy design, thus can be realized with less effort. Furthermore, the inventive pedal assembly can be manufactured with less material and less assembly work. Therefore, the inventive pedal assembly for a motor vehicle can be cost saving. This can be achieved by the inventive pedal assembly for a motor vehicle.

### List of reference numbers

- 2: Pedal assembly
- 4: Single support, designed as a single base plate
- 6: Accelerator pedal
- 7: Pedal arm opening of single base plate 4 for pedal arm 10
- 8: Brake pedal
- 9: Pedal arm opening of single base plate 4 for pedal arm 12
- 10: Pedal arm of accelerator pedal 6
- 12: Pedal arm of brake pedal 8
- 14: Pivot axis of pedal arm 10
- 16: Pivot axis of pedal arm 12
- 18: Separate sensor module for accelerator pedal 6
- 20: Separate sensor module for brake pedal 8
- 22: Sensor opening of single base plate 4 for separate sensor module 18
- 24: Sensor opening of single base plate 4 for separate sensor module 20
- 26: Interface of separate sensor module 18
- 28: Interface of separate sensor module 20
- 30: Frame part of single base plate 4

## Claims

1. Pedal assembly (2) for a motor vehicle with at least one support (4) and at least two pedals (6, 8), each comprising a pedal arm (10, 12) mounted to
said at least one support (4) and pivotable around a corresponding pivot axis (14, 16), a sensor (18, 20) for detecting a rotational movement of said pedal arm (10, 12) around said pivot axis (14, 16) and an interface (26, 28) for an electrical contact of said sensor (18, 20) with a control unit of said motor vehicle, wherein
said at least one support (4) is designed as a single base plate for said at least two pedals (6, 8) and at least one of said at least two pedals (6, 8) is housed by said single base plate (4), whereat said pedal arm (10, 12) of said housed pedal (6, 8) is extending through a pedal arm opening (7, 9) of said single base plate (4) **characterized in that**
said single base plate (4) is designed, that said at least one pedal (6, 8) housed by said single base plate (4) is mountable from a rear side of said single base plate (4), whereat said rear side is facing a frame of said motor vehicle said pedal assembly (2) is mounted to,
said single base plate (4) is comprising a frame part (30) for said at least one pedal (6, 8) housed by said single base plate (4).

2. Pedal assembly (2) according to claim 1,
wherein
at least two of said at least two pedals (6, 8) are housed by said single base plate (4).

3. Pedal assembly according to one of the claims 1 to 2,
wherein
said pedal arm of said at least one pedal housed by said single base plate comprises a central part corresponding to said single base plate and an actuation part linked to said central part in a power transmitting manner.

4. Pedal assembly according to one of the claims 1 to 3,
wherein
said at least two pedals comprise at least one pedal not housed by said single base plate, whereat said at least one pedal not housed by said single base plate is housed by a separate cover mounted to said single base plate.

5. Pedal assembly (2) according to one of the claims 1 to 4,
wherein
said sensor (18, 20) of said pedal (6, 8) housed by said single base plate (4) is designed as a separate sensor module and incorporated through a sensor opening (22, 24) of said single base plate (4).

6. Pedal assembly (2) according to claim 5,
wherein
said interface (26, 28) corresponding to said sensor (18, 20) of said pedal (6, 8) housed by said single base plate (4) is designed as an integral part of said separate sensor module (18, 20).

7. Pedal assembly (2) according to one of the claims 1 to 6,
wherein
said single base plate (4) and/or said separate cover are/is built from plastics.

8. Pedal assembly (2) according to one of the claims 1 to 7,
wherein
said at least two pedals (6, 8) of said pedal assembly (2) are designed as an accelerator pedal (6) and a brake pedal (8).

## Patentansprüche

1. Pedalanordnung (2) für ein Kraftfahrzeug mit mindestens einem Träger (4) und mindestens zwei Pedalen (6, 8), die jeweils einen Pedalarm (10, 12), montiert an dem mindestens einem Träger (4) und um eine entsprechende Schwenkachse (14, 16) schwenkbar, einen Sensor (18, 20) zum Erkennen einer Drehbewegung des Pedalarmes (10, 12) um die Schwenkachse (14, 16) und eine Schnittstelle (26, 28) für einen elektrischen Kontakt des Sensors (18, 20) mit einer Steuereinheit des Kraftfahrzeugs umfassen, wobei
der mindestens eine Träger (4) als eine einzelne Bodenplatte für die mindestens zwei Pedale (6, 8) gestaltet ist und mindestens eines der mindestens zwei Pedale (6, 8) durch die mindestens eine Bodenplatte (4) eingehaust ist, wobei sich der Pedalarm (10, 12) des eingehausten Pedals (6, 8) durch eine Pedalarmöffnung (7, 9) der einzelnen Bodenplatte (4) erstreckt, **dadurch gekennzeichnet, dass**
die einzelne Bodenplatte (4) so gestaltet ist, dass mindestens ein durch die einzelne Bodenplatte (4) eingehaustes Pedal (6, 8) von einer Rückseite der einzelnen Bodenplatte (4) montierbar ist, wobei die Rückseite einem Rahmen des Kraftfahrzeugs, an dem die Pedalanordnung (2) montiert ist, zugewandt ist,
wobei die einzelne Bodenplatte (4) ein Rahmenteil (30) für das mindestens eine Pedal (6, 8), eingehaust von der einzelnen Bodenplatte (4), umfasst.

2. Pedalanordnung (2) nach Anspruch 1,
wobei
mindestens zwei der mindestens zwei Pedale (6, 8) durch die einzelne Bodenplatte (4) eingehaust sind.

3. Pedalanordnung nach einem der Ansprüche 1 bis 2,
wobei
der Pedalarm des mindestens einen Pedals, eingehaust durch die einzelne Bodenplatte, einen mittleren Teil, welcher der einzelnen Bodenplatte entspricht, und einen Betätigungsteil, der in einer kraftübertragenden Weise mit dem mittleren Teil verbunden ist, umfasst.

4. Pedalanordnung nach einem der Ansprüche 1 bis 3,
wobei
die mindestens zwei Pedale mindestens ein Pedal umfassen, das nicht von der einzelnen Bodenplatte eingehaust ist, wobei das mindestens eine Pedal, das nicht von der einzelnen Bodenplatte eingehaust ist, durch eine an der einzelnen Bodenplatte montierte separate Abdeckung eingehaust ist.

5. Pedalanordnung (2) nach einem der Ansprüche 1 bis 4,
wobei
der Sensor (18, 20) des Pedals (6, 8), eingehaust durch die einzelne Bodenplatte (4), als ein separates Sensormodul gestaltet und durch eine Sensoröffnung (22, 24) der einzelnen Bodenplatte (4) integriert ist.

6. Pedalanordnung (2) nach Anspruch 5,
wobei
die dem Sensor (18, 20) des Pedals (6, 8), eingehaust durch die einzelne Bodenplatte (4), entsprechende Schnittstelle (26, 28) als ein integraler Bestandteil des separaten Sensormoduls (18, 20) gestaltet ist.

7. Pedalanordnung (2) nach einem der Ansprüche 1 bis 6,
wobei
die einzelne Bodenplatte (4) und/oder die separate Abdeckung aus Kunststoff hergestellt ist/sind.

8. Pedalanordnung (2) nach einem der Ansprüche 1 bis 7,
wobei
die mindestens zwei Pedale (6, 8) der Pedalanordnung (2) als ein Fahrpedal (6) und ein Bremspedal (8) gestaltet sind.

## Revendications

1. Ensemble pédales (2) pour un véhicule automobile comportant au moins un support (4) et au moins deux pédales (6, 8), chacune comprenant un bras de pédale (10, 12) monté sur ledit support (4) et pouvant pivoter autour d'un axe de pivotement correspondant (14, 16), un capteur (18, 20) pour détecter un mouvement de rotation dudit bras de pédale (10, 12) autour dudit axe de pivotement (14, 16) et une interface (26, 28) pour un contact électrique dudit capteur (18, 20) avec une unité de commande dudit véhicule automobile, dans lequel
ledit support (4) est conçu comme une plaque de base unique pour au moins les deux pédales (6, 8) et où au moins l'une des deux pédales (6, 8) est logée par ladite plaque de base unique (4), où ledit bras de pédale (10, 12) de ladite pédale logée (6, 8) traverse une ouverture du bras de pédale (7, 9) de ladite plaque de base unique (4), **caractérisé en ce que**
ladite plaque de base unique (4) est conçue de manière à ce qu'au moins une pédale (6, 8) logée par ladite plaque de base unique (4) puisse être montée à partir d'une face arrière de ladite plaque de base unique (4), ladite face arrière faisant face à un châssis dudit véhicule à moteur sur lequel ledit ensemble de pédales (2) est monté,
ladite plaque de base unique (4) comprend une pièce de châssis (30) pour au moins une pédale (6, 8) logée dans ladite plaque de base unique (4).

2. Ensemble pédales (2) selon la revendication 1,
sachant que
au moins deux des pédales (6, 8) sont logées dans ladite plaque de base unique (4).

3. Ensemble pédales selon l'une des revendications 1 à 2,
sachant que
ledit bras de pédale de ladite pédale logée par ladite plaque de base unique comprend une partie centrale correspondant à ladite plaque de base unique et une partie d'actionnement liée à ladite partie centrale de manière à transmettre la puissance.

4. Ensemble pédales selon l'une des revendications 1 à 3,
sachant que
au moins deux pédales comprennent au moins une pédale non logée par ladite plaque de base unique, ladite pédale non logée par ladite plaque de base unique étant logée par un couvercle séparé monté sur ladite plaque de base unique.

5. Ensemble pédales (2) selon l'une des revendications 1 à 4,
sachant que
ledit capteur (18, 20) de ladite pédale (6, 8) logée par ladite plaque de base unique (4) est conçu comme un module de capteur séparé et incorporé à travers une ouverture de capteur (22, 24) de ladite plaque de base unique (4).

6. Ensemble pédales (2) selon la revendication 5,
sachant que
ladite interface (26, 28) correspondant audit capteur (18, 20) de ladite pédale (6, 8) logée par ladite plaque de base unique (4) est conçue comme partie intégrante dudit module de capteur séparé (18, 20).

7. Ensemble pédales (2) selon l'une des revendications 1 à 6,
sachant que
ladite plaque de base unique (4) et/ou ledit couvercle séparé sont/est construit(e)(s) en plastique.

8. Ensemble pédales (2) selon l'une des revendications 1 à 7,
sachant que
au moins deux pédales (6, 8) de l'ensemble pédales (2) sont conçues comme une pédale d'accélérateur (6) et une pédale de frein (8).
